# EUROPÄISCHE PATENTANMELDUNG

(11) **EP 1 780 502 A2**
(43) Veröffentlichungstag der Anmeldung: **02.05.2007**
(21) Anmeldenummer: 06123022.3
(22) Anmeldetag: 26.10.2006
(51) Int. Cl.: G01B 11/25

(54) **Verfahren und Vorrichtung zur Ermittlung der Form eines Objektes**

(30) Priorität: 26.10.2005 DE 102005051318
(71) Anmelder: Reiter, Mathias, 82515 Wolfratshausen (DE)
(72) Erfinder: Reiter, Mathias, 82515 Wolfratshausen (DE)
(74) Vertreter: Strych, Werner Maximilian Josef

(57) **Zusammenfassung**

Zur schnellen Bestimmung von dreidimensionalen Konturen, beispielsweise on-line bei industriellen Prozessen, muss die Erfassung und auch Verarbeitung der Daten optimiert werden. Die dreidimensionalen Kontur eines Objektes wird mittels des Lichtschnitt-Triangulationsverfahrens bestimmt. Dabei wird ein Lichtstrahl auf die Oberfläche des Objektes gerichtet, um eine Lichtlinie auf der Oberfläche zu erzeugen. Das auf der Oberfläche erzeugte Abbild des Lichtstrahls wird von einem in einem Triangulationswinkel zur Blickrichtung angeordneten optischen Sensor, vorzugsweise einem CMOS Sensor, aufgenommen. Unter Relativbewegung von Objekt und linienförmigem Abbild, in Bewegungsrichtung quer zur Erstreckungsrichtung des linienförmigen Abbildes definiert, wird vielfach hintereinander eine Einzelbildermittlung durchgeführt, aus denen die Ergebnisdaten berechnet werden. Es werden erfindungsgemäss nur der benötigte Teil der Bilddaten der Einzelbilder aus dem optischen Sensor ausgelesen und weiterverarbeitet.

## Beschreibung

### I. Anwendungsgebiet

Die Erfindung betrifft die 3D-Formermittlung.

### II. Technischer Hintergrund

Die Bestimmung der Daten 3-dimensionaler Konturen, insbesondere von Erhebungen auf im Prinzip ebenen Basisflächen, wird in der Industrie häufig benötigt, um definiert angebrachte Erhebungen wie Kleber, Punkte, Kleberaupen, Schweißnähte, Beschichtungen etc. einer Qualitätskontrolle zu unterziehen.

Die Ermittlung der Form oder anderer, mit der Oberflächenform zusammenhängender Ergebnisdaten, z. B. des Volumens der Erhebung wird dabei häufig mittels des Lichtschnittverfahrens durchgeführt.

Dabei wird ein fächerförmiger, also in nur einer Ebene aufgespreizter, Lichtstrahl auf die zu untersuchende Oberfläche gegeben und unter einem Winkel, meist einem spitzen Winkel, zur Bestrahlungsrichtung beobachtet, so dass der Verlauf des Abbildes des fächerförmigen Strahles auf der Oberfläche dort vorhandene Erhebungen erkennen lässt, indem auch das beobachtete Abbild dann eine Erhöhung zeigt, wenn der linienförmig auftreffende Lichtstrahl-Fächer über diese Erhebung hinweg verläuft, (sofern die Verlaufsrichtung der Lichtlinie nicht parallel zur Verlaufsrichtung der Erhebung liegt.)

Derartige einzelne Bilder der Lichtlinie auf dem Objekt werden - während sich das Objekt relativ und in Querrichtung zur Lichtlinie bewegt - in kurzen zeitlichen Abständen vielfach angefertigt, so dass durch Hintereinanderstellung dieser einzelnen Höhenschnitte, also Scans, die 3-dimensionale Oberflächengestaltung ermittelt werden kann, und/oder damit zusammenhängende Parameter wie Höhe, Volumen, Breite, Lage der Erhebungen usw.

Die künstlich aufgebrachten Erhebungen werden in der Regel während des laufenden Herstellungsprozesses eines Objektes detektiert, so dass eine sehr hohe Erkennungsgeschwindigkeit und Verarbeitungsgeschwindigkeit dieser Konturermittlung notwendig ist, wenn beispielsweise das Objekt mit einer Geschwindigkeit von 600 m/min unter der Lichtlinie durchläuft.

Wenn das Detektieren beispielsweise mittels eines handelsüblichen Flächensensors mit 512 x 512 Pixeln mit 30 Hz, also 30 Scans pro Sekunde, erfolgt, müssen pro Sekunde fast 8 Millionen Datensätze verarbeitet werden, wenn pro Pixel nur ein Datensatz unterstellt wird. Ein Datensatz besteht jedoch mindestens aus zwei einzelnen Datenfeldern (Position und Lichtintensität), unter Umständen auch mehr.

Dementsprechend kann sowohl die Mindestzeit zwischen den einzelnen Scans, bedingt durch den optischen Sensor, als auch die Verarbeitungsgeschwindigkeit der so ermittelten Bilddaten durch die nachgeschaltete elektronische Auswerteeinheit die begrenzende Größe darstellen.

Die Mindestzeit zwischen den einzelnen Scans ist die Summe aus einerseits der immer benötigten, und im Wesentlichen auch gleich langen Belichtungszeit für den Sensor und der führt ans Auslesen der Bilddaten aus dem optischen Sensor in die nachgeschaltete Verarbeitungseinheit benötigte Zeit, wobei diese Auslesezeit je nach Sensortyp von der Anzahl der ausgelesenen Datensätze, also ausgelesenen Pixel, abhängen können.

Die Verarbeitungsgeschwindigkeit der ausgelesenen Bilddaten hängt einerseits von der zu verarbeitenden Datenmenge und andererseits von der Art der Verarbeitungsoperationen und deren Anzahl ab.

Im Idealfall ist die Zeit zum Verarbeiten der Datenmenge eines Scans gleich kurz oder kürzer als die Mindestzeit zwischen den einzelnen Scans, oder zumindest ist die durch den Verarbeitungsprozess vorgegebenen Mindestzeit zwischen den aufeindanderfolgenden Daten-Einleseoperationen der einzelnen Scans in die Verarbeitungseinheit gleich kurz oder kürzer als die Mindestzeit zwischen den Scans, indem die Verarbeitung der ausgelesenen Bilddaten sequenziell so erfolgt, dass der Zeitbedarf für die einzelnen Bearbeitungsstufen jeweils unter der Mindestzeit zwischen den Scans liegt.

Die sich so ergebende Scanfrequenz soll im Ergebnis so hoch liegen, dass bei maximaler Laufgeschwindigkeit des zu beobachtenden Objektes, also der Produktionsmaschine etc., die einzelnen Scans auf dem Objekt mit einen so kurzem räumlichen Abstand hintereinander durchgeführt werden, das eine quasilückenlose Überprüfung der interessierenden Oberflächendaten möglich wird.

Um beim Beispiel der Kontrolle einer im laufenden Prozess auf einer Oberfläche aufgebrachten Kleberaupe zu bleiben, wird entlang dieser Kleberaupe alle ..... cm ein Scan durchgeführt, und ermittelt, welche Höhe/Breite und/oder Querschnittfläche die Kleberaupe an jedem einzelnen Scan hatte. Allein aufgrund der Konsistenz des Klebers und des Trägheitsverhaltens der die Kleberaupe aufbringenden Düsen ist somit sichergestellt, dass keine die spätere Qualität der Klebeverbindung beeinflussenden Fehlstellen in der Kleberraupe auftreten können.

### III. Darstellung der Erfindung

### a) Technische Aufgabe

Um diese Aufgabe einer möglichst hohen Verarbeitungsgeschwindigkeit zu lösen, sind mehrere einzelne oder in Summe anzuwendende Möglichkeiten gegeben:

### b) Lösung der Aufgabe

Diese Lösungen sind in den Ansprüchen 1 und 16 beschrieben. Vorteilhafte Ausführungsformen ergeben sich aus den Unteransprüchen.

Indem nur ein Teil der Bilddaten aus dem optischen Sensor ausgelesen wird, reduziert sich - abhängig von der Art des verwendeten optischen Sensors - die Auslesezeit und damit die Mindestzeit zwischen zwei aufeinander folgenden Scans und es reduziert sich vor allem die zu verarbeitende Datenmenge, was den Zeitbedarf für die gesamte nachfolgende Datenverarbeitung reduziert.

Eine der für die Arbeitsgeschwindigkeit der Anlage wichtigsten Entscheidungen wird vor Beginn des gesamten Einsatzes getroffen, nämlich die Entscheidung, ob der Sensor mit seiner Zeilenrichtung parallel oder quer zur Haupterstreckungsrichtung der Lichtlinie eingesetzt wird. Da das Aktivieren der einzelnen Zeile des Datenspeichers des optischen Sensors Zeit benötigt, also auch dann, wenn nur einige wenige Pixel aus dieser Zeile ausgelesen werden, wird prinzipiell versucht, die Anzahl der beim Auslesen berührten Zeilen des optischen Sensors möglichst gering zu halten.

Dieser Effekt kann sich jedoch ins Gegenteil verkehren, wenn zwar nur ein Teil, aber immerhin ein erheblicher Teil, der im Sensor vorhandenen Zeilen betroffen ist, aber aus jeder Zeile eine relativ große Pixelanzahl benötigt wird.

Eine Reduzierung der gesamten Lichtlinie, die im Regelfall eine Breite von mehreren Pixeln besitzt, auf eine Linienbreite mit nur einem Pixel reduziert alle weiteren Verarbeitungsvorgänge von der Datenmenge her umso stärker, je breiter das Abbild vorher war.

Sofern die Reduzierung auf die Breite eines Pixels die Ergebnisdaten nicht verfälscht, ist es sinnvoll, diese Datenreduzierung so früh wie möglich durchzuführen.

Um wie bei der Beobachtung einer Kleberraupe das Profil der Kleberraupe an einer bestimmten Längsposition der Raupe, also bei einem bestimmten Scan, zu bestimmen, ist es ausreichend, an jeder Längsposition der Lichtlinie diese durch nur einen einzigen Wert, also eine einzige Pixelposition, zu repräsentieren anstelle der vollständigen Helligkeits-Verteilung über die Breite der Lichtlinie, wie sie der optische Sensor im Prinzip liefert.

Man könnte nun als repräsentative Querposition beispielsweise diejenige Querposition an einer bestimmten Längsposition des Abbildes der Lichtlinie, wählen, die über die Breite betrachtet den höchsten Helligkeitswert besitzt.

Nur bei einen über die Breite der Lichtlinie immer gleichmäßigen, z. B. entsprechend einer Gauss-Verteilung, Helligkeitsverteilung, ergibt dies tatsächlich die relevante Mitte des Abbildes, also der Lichtlinie. In der Praxis jedoch kann über die Breite der Lichtlinie betrachtet auch ein am Rand der Lichtlinie liegender Pixel die höchsten Helligkeitswerte besitzen aufgrund von Unregelmäßigkeiten in der Oberflächenstruktur, des Reflektionsgrades oder ähnlichem am Objekt an dieser Stelle.

Ein weniger anfälliger und daher repräsentativerer Wert ist dagegen der Schwerpunkt der Helligkeitsverteilung an einer Stelle der Lichtlinie über dessen Breite, die sich z. B. wie folgt auf einfache Art und Weise annähern lässt:
Für die über die Breite der Lichtlinie nebeneinander liegenden Pixel werden jeweils das Produkt aus Helligkeitswert und Pixelposition ermittelt und diese Produkte aufaddiert.

Diese Summe wird durch die Summe der Pixelpositionen dividiert und ergibt als Ergebnis die Pixelposition, an der der Schwerpunkt der Helligkeitsverteilung dieses Lichtlinienquerstreifens liegt.

Bei welchem Verarbeitungsschritt diese Reduzierung auf nur einen einzigen relevanten Profilpunkt pro Längsposition der Lichtlinie möglich ist, hängt u. a. von der zuvor erwähnten Festlegung der Orientierung der Zeilenrichtung des Sensors relativ zur erwarteten Lichtlinie ab:
Das Reduzieren der Breite des Abbildes, also der Lichtlinie, auf eine einzige Querposition, einen Profilpunkt, ist dann sehr einfach zu erreichen, wenn der optische Sensor ohnehin mit seiner Zeilenrichtung quer, insbesondere lotrecht zur Erstreckungsrichtung der Lichtlinie orientiert war. In diesem Fall muss man aus jeder der Zeilen nur diejenigen Pixel mit ihrem Helligkeitswert aus dem optischen Sensor auslesen, die beleuchtet waren, also einen erhöhten Helligkeitswert gegenüber dem Rest besaßen, und diese Werte und Positionen, also Datensätze, in einen Bilddatenspeicher übertragen.

Anschließend kann aus den Helligkeitswerten der über die Breite der Lichtlinie nebeneinander liegenden Pixeln, z. B. nach der Schwerpunktmethode, ein einziger repräsentativer Profilpunkt berechnet werden, so dass ab dieser Profilpunktberechung die gesamte Lichtlinie, die eigentlich bisher ein breites Lichtband war, nur noch durch eine in Erstreckungsrichtung der Linie hintereinander liegende Abfolge einzelner Profilpunkte besteht.

Hatte das Lichtband vorher eine Breite von 10 Pixeln, reduziert sich dadurch die Datenmenge, die weiterverarbeitet werden muss, bereits um den Faktor 10.

Um zu wissen, welche Pixel einer Zeile sich vermutlich als beleuchtet herausstellen werden, kann man davon ausgehen, dass in einer benachbarten Zeile die beleuchteten Positionen nur wenig unterschiedlich zu denjenigen der vorhergehenden Zone sein werden.

Um nicht zu viele Daten aus jeder Zeile auslesen und in den Bilddatenspeicher übertragen zu müssen, wird dies nur für diejenigen Positionen vollzogen, die auch bei der vorangegangenen Zeile beleuchtet waren zuzüglich eines Sicherheitsbereiches, für den eine Anzahl von Pixeln festgelegt wird aufgrund eines Erfahrungswertes, wie stark sich die beleuchteten Positionen von einer Zeile zur nächsten verändern können.

Bei einem Scan wird dabei die erste Zeile vollständig ausgelesen, um hier erstmals zu ermitteln, welche Positionen auf der Zeile beleuchtet waren, also grob die Lage des Abbildes an dieser Position zu bestimmen.

Anders sieht es dagegen aus, wenn der optische Sensor so angeordnet war, dass seine Zeilenorientierung parallel zur Haupt-Erstreckungsrichtung der Lichtlinie verläuft:
In diesem Fall werden zunächst die Daten derjenigen Zeilen, in denen ein oder mehrere beleuchtete Pixel zu erwarten sind, zeilenweise ausgelesen und in einen Zwischenspeicher übertragen. Erst aus diesem Zwischenspeicher können die Datensätze spaltenweise, hinsichtlich der Breite des Lichtbandes nebeneinander liegend, ausgelesen und aus diesen über die Breite nebeneinander liegenden Werten der Profilpunkt, z. B. nach dem Schwerpunktverfahren, berechnet werden.

Dies ist erforderlich, da aus dem optischen Sensor in aller Regel ein Auslesen von Daten grundsätzlich nur zeilenweise möglich ist, aufgrund der Konfiguration dieser optischen Sensoren.

Um zu wissen, in welchen Zeilen beleuchtete Pixel zu erwarten sind, hilft nur ein Vergleich mit dem vorhergehenden Scan:

Auch hier wird davon ausgegangen, dass sich von einem Scan zum nächsten die Lage der beleuchteten Bildpunkte nur wenig ändert, und es werden deshalb im nachfolgenden Scan nur diejenigen Zeilen ausgelesen, die beim vorherigen Scan ebenfalls beleuchtete Pixel enthielten, zuzüglich wiederum eines Sicherheitsbereiches mit einigen Zeilen darüber und darunter.

Der erste Scan muss aus diesem Grund vollständig durchgeführt werden, um hier wiederum erstmals grob die Lage der Lichtlinie zu bestimmen.

Beide Verfahren können in der Praxis dadurch weiter verfeinert und die Datenreduzierung vergrößert werden, in dem aus der Gesamtfläche des optischen Sensors nur die Daten eines Teilbereiches ausgelesen werden, nämlich desjenigen Teilbereiches, indem man die Aufwölbung der Lichtlinie gegenüber deren ansonsten geradem Verlauf vermuten kann, sofern entweder in den ausgelesenen Datensätzen die Position des jeweiligen Pixels mit enthalten ist oder lediglich die qualitative und quantitative Form der Aufwölbung interessiert, nicht jedoch deren Position innerhalb der gesamten Sensorfläche.

Auf diese Art und Weise werden bei der ersten Methode (Orientierung der Sensorzeilen lotrecht zur Erstreckungsrichtung der Lichtlinie) von vornherein nur diejenigen Zeilen ausgelesen und bearbeitet, die im Bereich der Aufwölbung liegen bzw. bei der zweiten Methode (Zeilenorientierung des Sensors parallel zur Erstreckungsrichtung der Richtlinie) nur die Datensätze aus denjenigen Abschnitten der interessierenden Zeilen ausgelesen, in denen die Aufwölbung zu erwarten ist.

Welcher Bereich dies ist, kann in der Regel nur dadurch festgestellt werden, dass beim ersten Scan die Bilddaten der kompletten Sensorfläche betrachtet und verarbeitet werden, und daraus die Position der Erhebung ermittelt und festgehalten wird. Auch hier wird für die nachfolgenden Scans jeweils davon ausgegangen, dass sich die Position der Erhebung gegenüber dem vorhergehenden Scan nur geringfügig ändern kann, und deshalb bei jedem Scan nur dasjenige Fenster innerhalb der Sensorfläche betrachtet und verarbeitet wird, in dem beim vorhergehenden Scan die Aufwölbung gelegen hatte zuzüglich eines umlaufenden, als Pixelanzahl festgelegten, Sicherheitsbereiches.

Das zu betrachtende Fenster wird dabei so klein wie möglich festgelegt, um bei geringst möglicher Datenmenge die Ergebnisdaten unverfälscht berechnen zu können.

Um den sehr rechenintensiven Schritt einer ersten Division, wie sie bei der Schwerpunktberechnung notwendig ist, zu vermeiden, wird - da als Ergebnis eine relativ kleine Zahl zu erwarten ist - statt einer Division das mehrfache schrittweise Subtrahieren des Nenners vom Zähler durchgeführt, was als Ergebnis eine ganze Zahl ergibt. Diese Vorgehensweise kann auch für die Dezimalstellen hinter dem Komma durchgeführt werden, da jedoch als Endergebnis ganze Zahlen gewünscht werden, muss anschließend mit Zehnerpotenzen multipliziert werden, so dass aus der Dezimalzahl eine ganze Zahl wird.

Ein weiteres Problem besteht darin, dass die Erstreckungsrichtung der Lichtlinie, also der Verlaufsrichtung abgesehen von der Aufwölbung, zwar ursprünglich je nach Vorgehensweise parallel zur Linienrichtung oder Reihenrichtung des Sensors ausgerichtet wurde, sich diese Ausrichtung jedoch ändern kann. Wenn beispielsweise die auf einem Karton oder einem Papier aufgebrachte Kleberraupe untersucht werden soll, kann sich dieser Karton bzw. dieses Papier ungewollt vom Untergrund, z. B. einem unterstützenden Tisch, abheben, und damit die Erstreckungsrichtung schräg zur Linien- oder Spaltenrichtung liegen.

Sofern nur das Vorhandensein bzw. Querschnittsgröße, Höhe oder andere Parameter der Kleberraupe und damit der Aufwölbung, in der Lichtlinie kontrolliert werden soll, ist diese Schräglage der Erstreckungsrichtung unerheblich und wird rechnerisch wie folgt eliminiert:
Insbesondere nachdem das ursprünglich breite Lichtband auf eine echte Lichtlinie bestehend aus einzelnen Profilpunkten reduziert wurde, wird die Höhendifferenz des ersten zum letzten der Profilpunkte, nicht unbedingt über die gesamte Erstreckung des Sensors, sondern nur über die betrachtete interessierende Fläche, ermittelt.

Diese Höhendifferenz dividiert durch die Anzahl der Abstände zwischen dem ersten und letzten Profilpunkt wird von allen Profilpunkten abgezogen, jedoch nicht von den niedrigeren der beiden Endpunkte, und das Abziehen erfolgt multipliziert um den Abstand des betreffenden Punktes von dem unveränderten Endpunkt.

Die so "gerade gelegte", also normierter Erstreckungsrichtung kann nun zusätzlich auf ein definiertes Höhenniveau verschoben werden, vorzugsweise allerdings nicht auf das Nullniveau, da auch in der theoretisch gerade verlaufenden Erstreckungsrichtung geringe Abweichungen nach unten, in den negativen Bereich, vorhanden sein können, die bei Ablegen auf Nulllinie ganz verschwinden würden. Besser ist deshalb ein Ablegen auf einem definierten, niedrigen Niveau, also beispielsweise auf - in Pixeln ausgedrückt - einer Höhe von 2 oder 3 Pixel.

Weitere Vereinfachungen beim Berechnen der Ergebnisdaten können durchgeführt werden, jedoch nur abhängig davon, welcher Art die Ergebnisdaten sein sollen, also was genau berechnet und überprüft werden soll.

Am Beispiel der Detektion einer ausreichend dick vorhandenen Kleberraupe interessiert beispielsweise - innerhalb eines gewissen Rahmes - nur, ob die Kleberraupe eine bestimmte Masse, also durchgängig vorhandenes Volumen und damit Querschnittsfläche, besitzt.

Anhand der Konsistenz des verwendeten Klebers kann dies durch unterschiedliche Hilfsparameter sicher bestimmt werden:
Eine einfache Möglichkeit besteht darin, die absolute Höhe der Kleberaupe zu ermitteln ausgehend von der Überlegung, dass das Vorhandensein einer festgelegten Mindesthöhe immer auch das Vorhandensein eines gewünschten Mindestquerschnittes an dieser Stelle bedeutet.

Für die rechnerische Verarbeitung ist diese Methode jedoch eher nachteilig, da sich die absolute Höhe der Kleberraupe in der Praxis immer geringfügig ändert, und derartige singuläre Punkte wie ein Maximum immer schwer und nur mit relativ hohem Rechenaufwand zu bestimmen sind.

Einfacher ist es daher, die Breite der Kleberraupe auf einer bestimmten definierten Messhöhe über dem Untergrund zu ermitteln.

Nach Reduzieren der bandförmigen Lichtlinie auf eine Profilpunkt-Linie, gegebenenfalls dem Geradeziehen und auf Normniveau herabsetzender Profillinie, müssen für die Breitenbestimmung auf Messhöhe lediglich zwei auf dieser Messhöhe liegende Profilpunkte hinsichtlich ihres Querabstandes zueinander bestimmt werden, was einen sehr viel geringeren Rechenaufwand erfordert.

Ebenso kann anstelle des Seitenabstandes dieser beiden auf Messhöhe liegenden Profilpunkte die erste Ableitung, also die Flankenneigung der Kleberraupe in diesen Profilpunkten, ermittelt werden. Hierfür ist der Rechenaufwand naturgemäß etwas größer, da das Berechnen der ersten Ableitung zusätzlichen Rechenaufwand erfordert, jedoch ist die daraus erzielbare Aussage genauer, denn mit der Neigung ändert sich vor allem die Fußbreite der Kleberaupe und damit relativ stark die Querschnittsfläche.

Eine weitere Verringerung der Verarbeitungszeit durch Reduzieren der Verarbeitungsmenge an Daten kann dadurch erfolgen, dass von vorneherein - selbst wenn nur der interessierende Bereich innerhalb der Sensorfläche aus dem Sensor ausgelesen wird - nicht die Daten jedes Pixels, sondern nur bestimmter Pixel in definierten Abständen, z. B. jedes dritten Pixels in Längsrichtung und jedes zweiten Pixels in Querrichtung oder ähnliches, ausgelesen und weiterverarbeitet wird.

Ob dies zu einer noch zulässigen Vergröberung der Ergebnisdaten führt, muss im Einzelfall anhand der vorhandenen Einflussfaktoren überprüft werden.

In Bewegungsrichtung, der Verlaufsrichtung des Objektes werden die Ergebnisdaten, beispielsweise auch bereits die Profilpunkt-Linien, mittels der CPU rechnerisch zusammengesetzt auf Basis der inneren Taktung der Produktionsmaschine, die als Steuertakt für dieses Zusammensetzen benutzt wird, und zu diesem Zweck von der Maschine an die CPU geliefert werden muss.

Indem auch eine notwendige Zwischenspeicherung der Bilddaten innerhalb der Verarbeitungseinheit, z. B. des FPGA, erfolgt, sind die Übertragungszeiten in und aus dem Zwischenspeicher gering.

Indem die elektronische Verarbeitungseinheit neben dem Speicher auch eine CPU enthält, handelt es sich um eine Einchip-Lösung, die mit wenig Bauraum und geringem Energiebedarf auskommt.

Dabei kann die CPU auch aus Logikschaltelementen gebildet sein, die innerhalb des FPGA vorhanden sind, so dass eine sehr genau zweckgerichtete CPU erstellt werden kann mit dem geringst möglichen Verbrauch an Ressourcen des FPGA und damit dessen optimaler Ausnutzung.

Die Verarbeitungsgeschwindigkeit kann ferner dadurch erhöht werden, dass innerhalb der Verarbeitungseinheit, z. B. dem FPGA, mehrere Datensätze gleichzeitig bearbeitet werden, insbesondere so viele Datensätze, wie der Sensor parallele Ausgänge besitzt.

Die Verarbeitungsgeschwindigkeit wird jedoch auch erhöht, indem sequenziell nacheinander durchzuführende Verarbeitungsschritte an einem Pixel bzw. Datensatz zeitgleich durch unterschiedliche Elemente derselben Verarbeitungseinheit durchgeführt werden, was bewirkt, dass der nächste Scan nicht erst dann durchgeführt werden kann, wenn die Bilddaten des vorhergehenden Scans vollständig, also bis zu Erzielung der Ergebnisdaten, abgearbeitet sind, sondern bereits früher.

Um die vorbeschriebenen günstigen Verfahrensweisen vollziehen zu können, weist die Vorrichtung bevorzugt folgende Merkmale auf:
Die Verarbeitungseinheit ist entweder ein werkseitig programmierbarer Gate-Array (FPGA) oder bei größeren Stückzahlen ein fest gebrannter Gate-Array oder ein digitaler Signalprozessor.

Dadurch kann die gesamte Verarbeitungseinheit für die Bilddaten bis zur Erzielung der Ergebnisdaten in dem Gehäuse untergebracht werden, in dem sich auch die Lichtquelle und die Detektoreinrichtung befindet und ohne das eine separate Kühlung oder Datenweiterleitung an einen externen Prozessor oder PC notwendig ist. Dadurch kann der Gesamtdetektor als autarke Einheit geliefert und verbaut werden.

Die Wahl eines CMOS-Sensors als optischem Sensors gegenüber z. B. einem CCD-Sensor ist deshalb vorteilhaft, weil nur ein CMOS-Sensor das Auslesen von Daten auch nur über Teilbereiche einer Zeile zulässt, und erst damit eine Untersuchung nur eines interessierenden Bereiches der Sensorfläche möglich ist.

Indem der Bilddatenspeicher und ggf. auch der Zwischenspeicher innerhalb der Verarbeitungseinheit, z. B. eines FPGA, vorhanden ist, kann der Zeitverlust für die Datenübertragung gering gehalten werden.

Indem die Abstrahlrichtung der Lichtquelle in einem gewünschten Winkel zur Beobachtungsrichtung der Detektoreinrichtung steht, sind für diese beiden Richtungen zueinander keine weiteren Justierungsmaßnahmen mehr notwendig. Durch die Winkeljustierung des Gehäuses zum Objekt wird lediglich der absolute Auftreffwinkel des Lichtstrahles auf der Objektoberfläche eingestellt und dabei vorzugsweise so, dass Beobachtungsrichtung und Einfallsrichtung des Lichts symmetrisch zur Lotrechten auf der Objektoberfläche stehen, sofern es sich, wie bei Kartonmaterial, um ein schwach reflektierendes Material handelt. Bei einem stark reflektierenden Material würde dies zu einer Überbelichtung des Sensors führen und der absolute Einstrahlwinkel müsste geändert werden.

Durch die Anordnung auf der Platine, auf der sich die Verarbeitungseinheit befindet, parallel zur Hauptebene des Gehäuses kann ein sehr schmal bauendes, plattenförmiges Gehäuse von höchstens ca. 2 cm Dicke erzielt werden. Damit ist das Gehäuse höchstens so breit wie die Beobachtungsbreite des gesamten Detektors auf der Objektoberfläche, so dass auch bei vielfacher Anordnung solcher Detektor-Einrichtungen nebeneinander kein Platzproblem aufgrund der Gehäusebreite entsteht. Dazu trägt auch bei, dass sowohl die Lichtquelle, insbesondere eine Laser-Patrone, mit einer Haupterstreckungsrichtung parallel zur Hauptebene im Gehäuse angeordnet ist, und der optische Sensor zwar quer zu ihr steht, seine Breite jedoch geringer ist als die Gehäusebreite.

Auch Reparaturen werden dadurch erleichtert, da durch Abnahme der Seitenfläche die größte Seite offen liegt und alle Reparaturen gut durchgeführt werden können.

Eine sehr kompakte Gehäuseabmessung auch innerhalb der Hauptebene des Gehäuses wird ferner dadurch erzielt, dass die Blickrichtung der Detektoreinheit innerhalb des Gehäuses einmal durch einen Spiegel umgelenkt wird und die ursprüngliche Blickrichtung innerhalb des Gehäuses damit ausgehend von dem flächigen optischen Sensor parallel zu einer der Schmalseiten des Gehäuses gelegt werden kann, beispielsweise derjenigen Schmalseite, in der sich die Durchlass-öffnungen für den Lichtstrahl oder den reflektierten Strahl zur Detektoreinrichtung befinden.

Dadurch sind Lichtquelle und Detektoreinheit kompakt und nahe beieinander untergebracht, während der Großteil des übrigen Raumes im Gehäuse für z. B eine einzige, großflächige Platine zu Verfügung steht, auf der die Auswerteeinheit komplett untergebracht ist.

### c) Ausführungsbeispiele

Ausführungsformen gemäß der Erfindung sind im Folgenden beispielhaft näher beschrieben. Es zeigen:
- Fig. 1:: eine Detektoreinheit gemäß der Erfindung in der Seitenansicht,
- Fig. 2:: die Detektoreinheit der Figur 1 in der Frontansicht, jeweils im Einsatz,
- Fig. 3:: ein Schaubild zu ersten Reduzierungsmethoden der Bilddatenverringerung,
- Fig. 4:: ein Schaubild zu weiteren Reduzierungsmethoden der Bilddatenverringerung, und

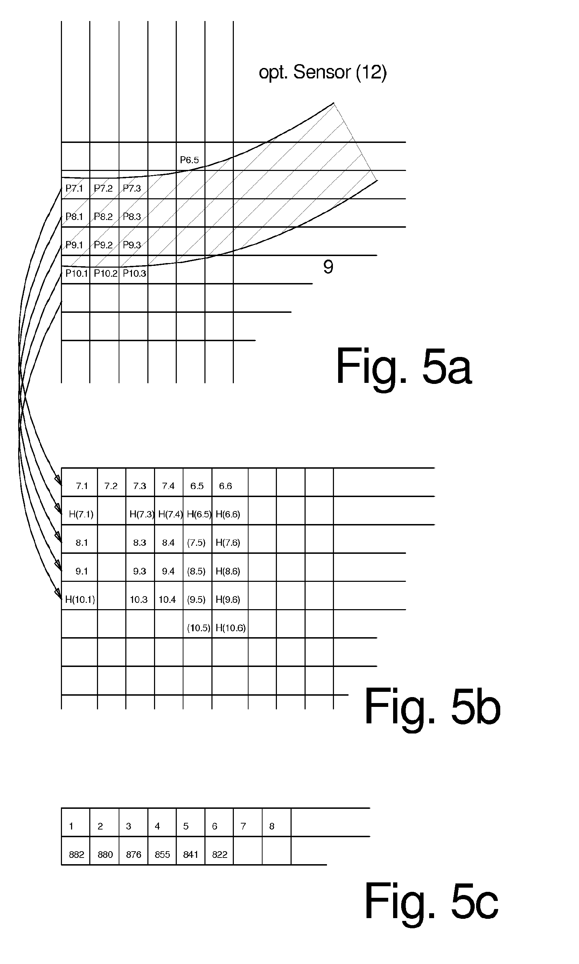

- Fig. 5:: ein Schaubild zu weiteren Reduzierungsmethoden der Bilddatenverringerung.

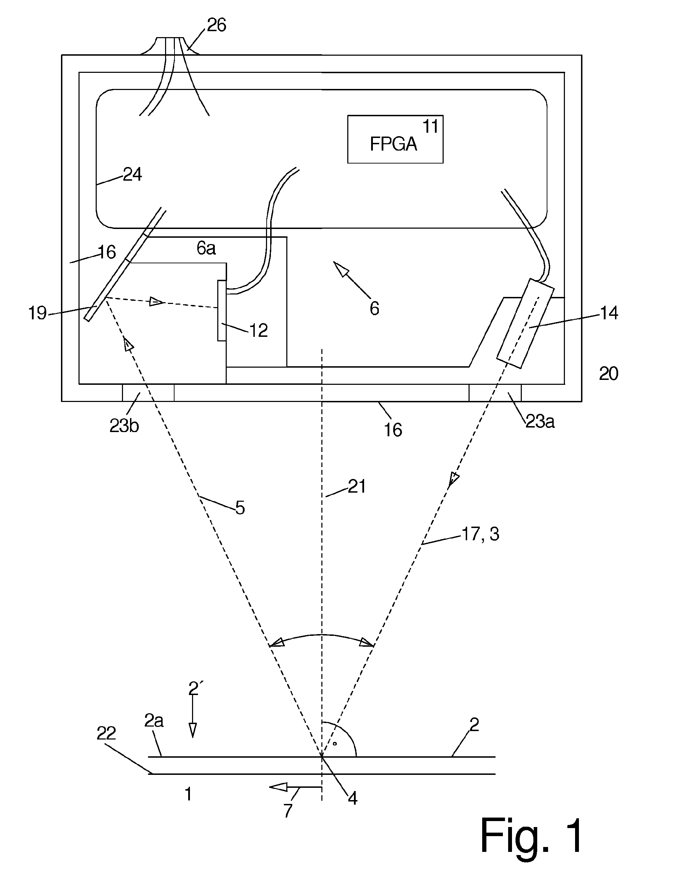

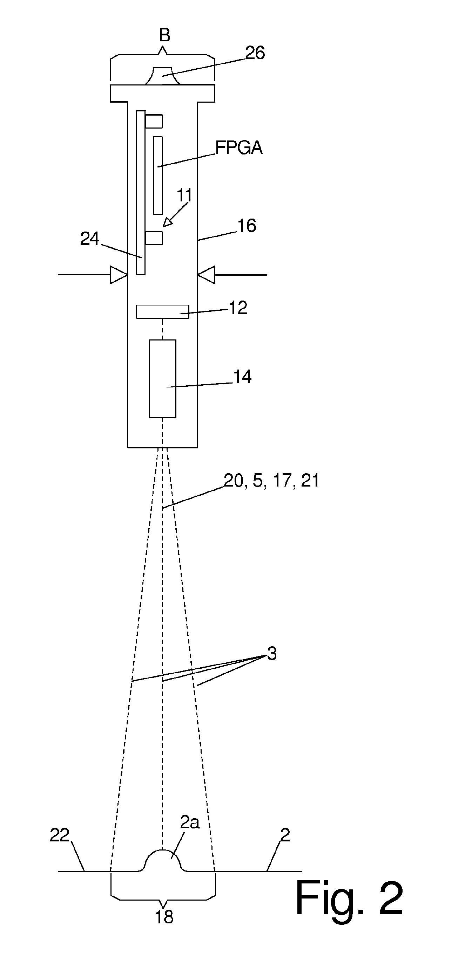

Figur 1 zeigt eine Detektoreinheit in der Seitenansicht, die auch erkennen lässt, wie das bekannte Lichtschnitt-Triangulationsverfahren prinzipiell funktioniert:
Dabei wird ein Lichtstrahl 3 auf die Oberfläche 2 eines Objektes 1 gerichtet und erzeugt dort ein Abbild 4, welches aufgrund der Fächerform des Lichtstrahles 3 - wie in Figur 2 ersichtlich - linienförmig ausgebildet ist. Das von der Oberfläche 2 des Objektes 1 reflektierte Abbild 4 des Lichtstrahles 3 wird von einer Detektoreinrichtung 6 aufgenommen, die aus z. B. einem flächigem, optischen Sensor 12 sowie einer damit verbundenen elektronischen Verarbeitungseinheit 11 zum Verarbeiten der vom Sensor 12 aufgenommenen Bilddaten und berechnen der Ergebnisdaten.

Damit sich auf dem optischen Sensor 12 ein Abbild 4 abzeichnet, welches Rückschlüsse auf die tatsächliche Kontur 2' der Oberfläche 2 an dieser Stelle zulässt, dürfen die Abstrahlrichtung 17 des Lichtstrahls 3 und die Blickrichtung 5 der Detektoreinheit 6 nicht zusammenfallen, sondern müssen sich durch einen Triangulationswinkel α unterscheiden. Vorliegend sind diese beiden Richtungen so gewählt, dass sie symmetrisch beidseits der Lotrechten 21 auf die Oberfläche 2 liegen, also von dieser jeweils einen Zwischenwinkel α₁ = α₂ einnehmen.

Eine Unebenheit, beispielsweise eine Erhebung 2a, auf der Oberfläche 2 im Auftreffbereich des Lichtstrahles 3, wird als Abbild 4 auf der Oberfläche 2 und damit auch auf dem Sensor 12 keine gerade Linie, sondern eine Linie mit einer Aufwölbung darin ergeben, wobei diese Aufwölbung des Abbildes 4, also der Lichtlinie, abhängig von dem Triangulationswinkel α und der Aufteilung in die Zwischenwinkel α₁ und α₂ sich von der Form der Aufwölbung 2a geschnitten entlang der Lotrechten 21 unterscheiden kann. Wegen der bekannten Winkel α, α₁, α₂ sowie der Fokussierung auf die Oberfläche und/oder der Bekanntheit des Abstandes der Detektoreinheit von der Oberfläche 2 kann aus den Abmessungen des Abbildes 4 auf die tatsächlichen Abmessungen der Aufwölbung 2a auf der Oberfläche 2 rechnerisch geschlossen werden.

Wie Figur 1 zeigt, sind nicht nur die erwähnten Komponenten der Detektoreinrichtung 6, sondern auch die Lichtquelle 14 zur Erzeugung des ausgesandten Lichtstrahles 3 gemeinsam innerhalb des Gehäuses 16 der Detektoreinheit untergebracht, wobei dieses Gehäuse plattenförmig flach ist mit einer Hauptebene parallel zu der durch Abstrahlrichtung 17 und Blickrichtung 5 aufgespannte Arbeitsebene und einer Breite B quer zu dieser Hauptebene 20, die nicht größer ist als die Beobachtungsbreite 18 des fächerförmigen Lichtstrahles 3, mit der dieser auf der Oberfläche 2 auftrifft.

Wie Figur 1 zeigt, ist die Detektoreinheit auch von den Abmessungen in der Hauptebene 20 sehr kompakt aufgebaut, was dadurch erreicht wird, dass die Lichtquelle 14, in der Regel eine Laserpatrone, nahe des für den Lichtstrahl vorgesehenen Durchlasses 23a im Gehäuse 16 angeordnet ist und der optische Sensor 12 nahe des anderen Durchlasses 23b, die sich beide in einer der Schmalseiten des Gehäuses befinden, wobei zwischen diesem Durchlass 23b und dem optischen Sensor 12 eine Umlenkung des eintreffenden Lichtstrahls, also der Blickrichtung 5, über einen Spiegel 19 in eine Richtung parallel zu der Außenkante, in der sich die Durchlässe 23a, b befinden, erfolgt.

Sowohl der Sensor 12 als auch der Spiegel 19 sind dabei an einem Detektor-Basiskörper 6a befestigt, der seinerseits am Gehäuse 16 der Einheit fixiert ist.

Dadurch verbleibt auf der von der Außenseite mit den Durchlässen 23a, b abgewandten Hälfte des Gehäuses ausreichend viel Platz, um dort eine in der Hauptrichtung 20 des Gehäuses liegende Platine 24 anzuordnen, die die gesamte elektronische Verarbeitungseinheit 11 enthält und mit dem Sensor 12 über elektrische Leitungen ebenso in Verbindung steht wie mit der Lichtquelle 14. Die von der Verarbeitungseinheit 11 ermittelten Ergebnisdaten werden über einen Stecker 26 ausgegeben.

Die nach dem Lichtschnittverfahren hergestellten Einzelaufnahmen werden in zeitlich schneller Abfolge wiederholt, um die sich in Bewegungsrichtung 7 relativ zur Detektoreinheit bewegende Oberfläche 2 des Objektes 1 ständig zu beobachten. Da dies z. B. an einer Produktionsmaschine für das Objekt 1 oder die Erhebung 2a auf der Basisfläche 2, beispielsweise eine Kleberraupe auf einem Karton als Basisfläche 22, durchgängig geschehen soll, ist es notwendig, dass die Berechnung der Ergebnisdaten zeitaktuell geschieht, also von der Verarbeitungseinheit die Ergebnisdaten genauso schnell, also im gleichen Rhythmus, geliefert werden müssen, wie die einzelnen Aufnahmen von dem Sensor 12 angefertigt werden.

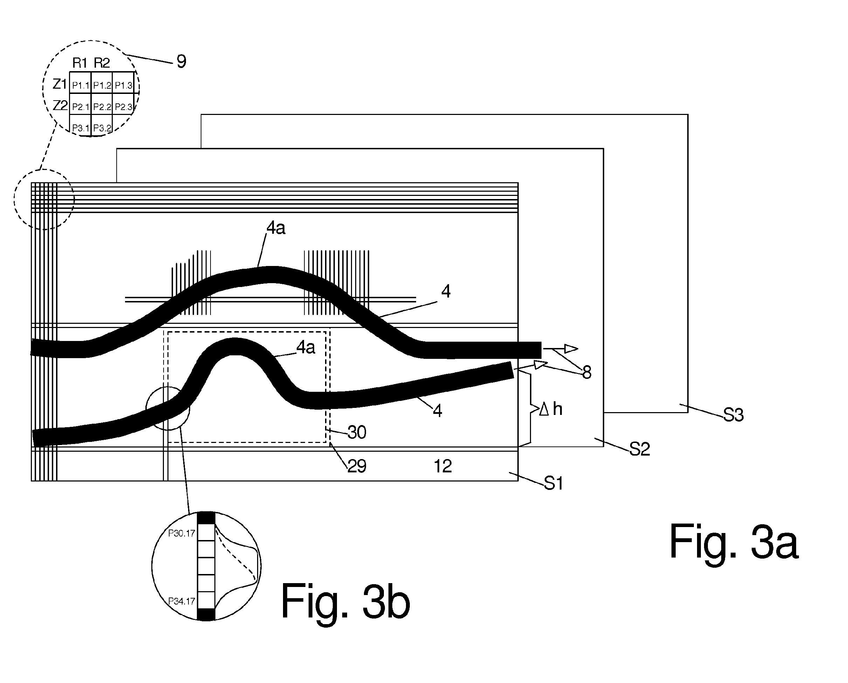

Um dies zu erreichen, wird versucht, die für das gewünschte Ergebnis, nämlich eine Bestimmung bestimmter geometrischer Parameter, wie etwa Höhe, Querschnittsvolumen etc., der Erhebung 2a relevante Datenmenge so früh wie möglich zu reduzieren und damit den für die Berechnung der Ergebnisdaten notwendigen Rechenaufwand zu minimieren. Hierfür werden mehrere Methoden vorgeschlagen, die auch ergänzend zueinander eingesetzt werden:
Anhand der Figur 3 werden erste Reduzierungsmethoden erläutert.

Fast alle Reduzierungsmethoden beruhen darauf, dass mittels der Detektoreinheit nicht zufällige Konturgestaltungen untersucht werden, sondern dabei bestimmte Konturen erwartet werden, wie im Beispielsfall der Figuren eine Aufwölbung 4a in einem ansonsten im wesentlichen linienförmig geraden Abbild 4 in Form einer Lichtlinie bzw. eines Lichtbandes.

Dabei müssen die Abmessungen dieser Aufwölbung 4a ermittelt werden und daraus die tatsächlichen Abmessungen der Erhebung 2a aus der Basisfläche 22 berechnet werden.

In Figur 3 sind zwei solcher Abbilder 4 und 4' gleichzeitig auf der Oberfläche des optischen Sensors 12 dargestellt, was in der Praxis jedoch nicht erfolgt, da pro Aufnahme, also für jeden Scan S1, S2, immer nur ein solches Abbild sichtbar ist.

Das Abbild 4 besteht darin, dass dort, wo die Lichtlinie auf der Fläche des Sensors 12 auftrifft, die entsprechenden rasterartig in Reihen R1, R2.. und Zeilen Z1, Z2.. angeordneten Pixel P1.1, P1.2.. P2.1. P2.2.. des Sensors 12 stärker beleuchtet sind, also einen höheren Helligkeitswert aufweisen, als diejenigen Pixel, auf denen das Abbild, also der vom Objekt 1 reflektierte Lichtstrahl 3, nicht auftrifft. In der zeichnerischen Schwarz-weiß Darstellung ist dies invers dargestellt, nämlich das Abbild 4 in Form der Lichtlinie dunkel dargestellt.

Die Pixel innerhalb des Abbildes 4 weisen dabei auch unterschiedliche Helligkeitswerte auf, in der Regel am Rand des bandförmigen Abbildes mit einem geringeren und in der Mitte mit einem höheren Helligkeitswert, was jedoch nicht immer der Fall ist und vom Reflektionsverhalten der Oberflächenkontur 2' abhängt.

Eine erste Reduzierungsmethode besteht darin, dass - da nur die Erhebung 4a interessiert - bereits beim Auslesen der Bilddaten 10 aus dem Bilddatenspeicher 9 des Sensors 12 nur die Datensätze derjenigen Pixel ausgelesen und weiterverarbeitet werden, die in dem interessierenden, meist rechteckigen, Bereich 30, welcher die Aufwölbung 4a zeigt, liegen. Dieser interessierende Bereich 30 wird ermittelt, indem beim ersten Scan S1 die Bilddaten sämtlicher Pixel des Sensors 12 ausgelesen werden und dann aufgrund des festgestellten Verlaufs des Abbildes 4 die Lage der Aufwölbung 4a nach Breite und Höhe ermittelt wird.

Bei dem nächsten Scan wird lediglich dieser interessierende Bereich 30 zuzüglich eines umgebenden, hinsichtlich seiner Größe festgelegten, Sicherheitsbereiches 29 als neuer interessierender Bereich 30 ausgelesen.

Auch im weiteren wird entweder bei jedem Scan oder nach einer jeweils festgelegten Anzahl von Scans überprüft, wie der in diesem Scan durch die Lage der Aufwölbung 4a festgelegte interessierende Bereich 30 liegt, und im nächsten oder den nächsten Scans wiederum der neu festgelegte interessierende Bereich 30 einschließlich eines umgebenden Sicherheitsbereiches 29 betrachtet, also ausgelesen wird.

Eine zweite Reduzierungsmethode liegt in der Datenreduzierung durch rechnerisches Reduzieren des an sich über mehrere Pixel breiten Lichtbandes des Abbildes 4', z. B. wiederum nur im interessierenden Bereich, auf die Breite nur eines Pixels.

So besitzt das Abbild 4 in Form einer Lichtlinie beispielsweise in Reihe 17 eine Breite von fünf Pixeln, indem in dieser Reihe die Pixel P30.17 bis einschließlich P34.17 einen erhöhten Helligkeitswert aufweisen.

Da primär der Verlauf des bandförmigen Abbildes 4 bzw. 4' und nicht deren Breite interessiert, ist es ausreichend, den Verlauf des Abbildes 4 auf eine in Erstreckungsrichtung 8 des Bandes hintereinander liegende Abfolge von einzelnen Pixeln, also auf eine Linie mit einer Breite von einem Pixel, zu reduzieren.

Dies kann auf mehrere Arten geschehen, z. B. indem an jeder Längsposition entlang der Erstreckungsrichtung 8 des Abbildes, also in diesem Fall in jeder Reihe, von den Pixeln mit erhöhtem Helligkeitswert dasjenige mit dem höchsten Helligkeitswert als relevantes Pixel gewählt wird, oder dasjenige Pixel in der Mitte der beleuchteten Pixel, in diesem Fall P32.17 aus P30.17 bis P34.17.

Da die Helligkeitsverteilung quer über das bandförmige Abbild 4' nicht immer gleichmäßig, z. B. nicht unbedingt gaußförmig, sein muss, soll eine Gewichtung hinsichtlich des Helligkeitswertes erfolgen und deshalb der Schwerpunkt der über der Breite b des Abbildes 4' aufgetragenen Helligkeitswerte bestimmt werden, was wie folgt geschieht:
Dadurch wird das bandförmige Abbild reduziert auf eine Abfolge einzelner Profilpunkte in Erstreckungsrichtung 8 des Abbildes hintereinander.

Eine dritte Reduzierungsmethode besteht darin, die neben der Erhebung 4a gerade verlaufenden Bereiche des Abbildes 4 parallel zur Zeilen- oder Reihenorientierung des Sensors 12 zu bringen und damit eine Lage des Abbildes wie bei Abbild 4 zu erreichen und nicht wie bei Abbild 4'. Dies wird bewirkt, indem entweder das Gehäuse 16 der Detektoreinheit relativ zu der Basisfläche 22 entsprechend einjustiert wird oder die Lage des Sensors 12 innerhalb des Gehäuses 16. Stattdessen oder auch zusätzlich hierzu kann ohne entsprechende körperliche Ausrichtung des Sensors 12 zur Basisfläche 22 rein rechnerisch ein "Geradeziehen", also eine Normierung des schräg in der Sensorfläche liegenden Abbildes 4' zu einem gerade liegenden Abbild 4, erfolgen.

Zu diesem Zweck wird der Höhenversatz Δh des Anfangs und Endes des schräg liegenden Abbildes 4' auf der Sensorfläche 12 - am besten erst nach einer Reduzierung des Abbildes 4' auf eine Abfolge einzelner Profilpunkte - anteilig von den jeweiligen Profilpunkten abgezogen:
Während der z. B. tief liegende linke Endpunkt unverändert bleibt, werden alle weiter rechts liegenden Profilpunkte um einen solchen Anteil von Δh nach unten gesetzt, der dem Abstand des jeweiligen Profilpunktes vom nicht veränderten Endpunkt in Relation zum gesamten Abstand vom linken zum rechten Endpunkt, also der Breite der Sensorfläche 12, entspricht.

Je besser die Erstreckungsrichtung 8 des Abbildes 4 mit der Richtung der Linien oder Spalten übereinstimmt, um so eher kann auf dieses rechnerische Geradeziehen verzichtet werden, wenn es lediglich auf die Bestimmung von geometrischen Eigenschaften der Erhöhung 4a ankommt.

Eine weitere Reduzierung des Berechnungsaufwandes kann erreicht werden, indem von Anfang an entschieden wird, ob es sinnvoller ist, die Erstreckungsrichtung 8 des Abbildes 4 parallel zur Zeilenorientierung oder parallel zur Reihenorientierung des Sensors 12 zu legen:
Dabei spielt es eine Rolle, dass vom inneren Aufbau her die meisten optischen Sensoren 12 so gestaltet sind, dass die Daten immer nur in Form einer kompletten Zeile von Pixeln ausgelesen werden können und nicht nur ausgewählte Pixel aus einer Zeile. Ein unmittelbar spaltenweises, also reihenweises Auslesen der Daten ist bei den meisten Sensoren gar nicht möglich, sondern dies erfolgt indirekt, indem beim zeilenweisen Auslesen die entsprechenden Pixel derselben Reihe turnusmäßig nacheinander ausgelesen werden.

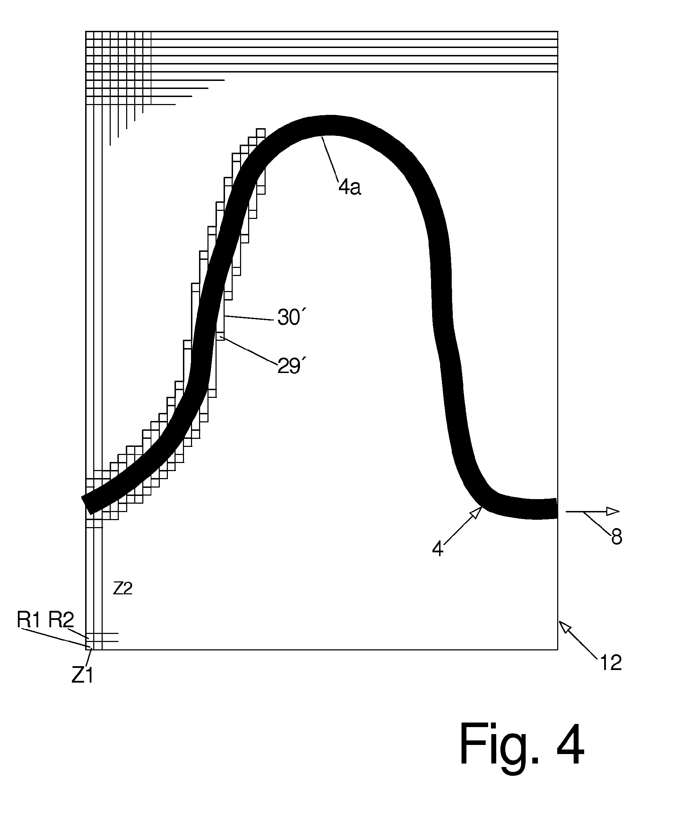

Wenn die erwartete Kontur, also z. b. die Aufwölbung 4a relativ zur Fläche des Sensors voraussichtlich nur eine begrenzte Höhe von z. B. weniger als der Hälfte, insbesondere weniger als ein Drittel der Länge der Sensorfläche betragen wird, wird eine Orientierung der Erstreckungsrichtung 8, also der Richtung der geraden Anteile des Abbildes 4, parallel zur Zeilenrichtung gewählt werden, wie in Figur 3a dargestellt. Erwartet man dagegen, dass die Aufwölbung 4a ohnehin einen größeren Teil der Länge des Sensors 12 einnehmen wird oder gar mehr als die Länge des meist in Breitformat, also mit Zeilenrichtung entlang der größeren Erstreckung vorliegenden Sensorfläche, so wird die Erstreckungsrichtung 8 - wie in Figur 4 dargestellt - parallel zur Reihenrichtung und damit rechtwinklig zur Zeilenorientierung gewählt werden.

Im letzteren Fall wird dann die Datenreduzierung vorzugsweise auch durch folgende Methode erfolgen:
Es wird versucht, wiederum nur den interessierenden Bereich 30' des Abbildes 4 auszuwerten. In diesem Fall jedoch nicht - wie in Figur 3 dargestellt - einen rechteckigen Bereich, in dem die gesamte Aufwölbung 4a Platz findet, sondern im diesem Fall jeweils nur die interessierenden Bereiche 30' an Pixeln bzw. deren Datensätze aus jeder Zeile weiterverarbeitet werden.

Auch in diesem Fall werden beim ersten Scan alle Pixel aus dem Bilddatenspeicher des Sensors ausgelesen, um zumindest bei der ersten Zeile die interessierenden Bereiche 30' dieser Zeile zu ermitteln. Analog zur Vorgehensweise des zweidimensionalen interessierenden Bereiches, wie anhand der Figur 3 erläutert, wird dann der neu interessierende Bereich 30' der nächsten Zeile übereinstimmend mit dem der vorherigen Zeile gewählt, zuzüglich eines daran anschließenden Sicherheitsbereiches 29' an beiden Enden, der wiederum vorzugsweise festgelegt ist durch eine Pixelanzahl.

Die Ermittlung des aktuell interessierenden Bereiches wird entweder in jeder Zeile neu durchgeführt oder in einer Abfolge von jeweils einigen Zeilen.

Die Datensätze der interessierenden Bereiche aus dem Bilddatenspeicher 9, dessen Datensätze in Reihen und Spalten organisiert sind wie die Pixel des Sensors 12, werden bei der rechnerischen Weiterverarbeitung hinsichtlich der Weiterverarbeitung 30' übertragen in einen Zwischenspeicher 25. Dies ist entweder zwingend erforderlich, weil aus dem Bilddatenspeicher 9 - wie vorstehend erwähnt - bei den meisten Sensorbauformen ohnehin nur ein Auslesen der Datensätze in ganzen Zeilen und nicht nur für einige Pixel einer Zeile möglich ist.

Deshalb werden für alle Zeilen zwar die Datensätze der jeweils gesamten Zeile aus den Bilddatenspeichern 12 - wie in Figur 4 dargestellt - ausgelesen, aber nur der jeweils interessierende Bereich 30' in einen Zwischenspeicher 25 übertragen.

Falls es sich um einen Sensortyp handelt, der innerhalb einer Zeile das Auslesen vorgegebener Pixelpositionen ermöglicht, wie etwa ein CMOS-Sensor, rechtfertigt folgende Datenverringerung dennoch die Übertragung in den Zwischenspeicher 25:
Der Datensatz für ein Pixel besteht aus mindestens drei Daten, nämlich einerseits der Pixelposition (x- und y- Wert im Sensor) und andererseits mindestens dem Helligkeitswert (Grauwert), den dieses Pixel auf dem Sensor 12 nach dem Belichten besaß. Da der in jeder Zeile interessierende Bereich 30' jeweils aus einer unmittelbar aufeinander nachfolgenden Abfolge von Pixeln innerhalb dieser Zeile besteht, genügt es für die Standortinformation, in einer ersten Zeile des Zwischenspeichers 25 jeweils diejenige Position festzuhalten, die das erste Pixel mit erhöhtem Helligkeitswert innerhalb einer Zeile besaß. In den Feldern des Zwischenspeichers 25 unter dieser Positionsangabe sind dann lediglich noch die Helligkeitswerte dieses ersten und der nachfolgenden Pixel mit erhöhtem Helligkeitswert innerhalb des jeweiligen interessierenden Bereiches, z. B. derselben Zeile, in den Zwischenspeicher 25 eingetragen.

Im Gegensatz zur Pixelanzahl und damit der Anzahl der Datensätze des Bilddatenspeichers 9 ist somit der Datenumfang des Zwischenspeichers 25 zum einen dadurch geringer, dass die Anzahl der Datensätze drastisch verringert wurde (nämlich auf die Anzahl der Pixel mit erhöhtem Helligkeitswert) und andererseits die Datenmenge dadurch reduziert, dass jeder Datensatz zumindest um die um die Positionsangabe verringerte Datenmenge, beispielsweise nur ein Drittel der ursprünglichen Datenmenge, besitzt.

Aus den Informationen einer Reihe R1, R2.. aus dem Zwischenspeicher 25, die aus der Positionsangabe und den nachfolgenden Helligkeitswerten besteht, lässt sich anschließend - beispielsweise nach der Methode der SchwerpunktsBestimmung - für den Querschnitt des Abbildes 4 in jeder Zeile ein einziger Profilpunkt berechnen, so dass diese Abfolge einzelner Profilpunkte das gesamte bandförmige Abbild 4 repräsentiert für die weitere Bestimmung der gewünschten geometrischen Daten betreffend die Aufwölbung 4a.

### BEZUGSZEICHENLISTE

- 1: Objekt
- 2: Oberfläche
- 2': Oberflächen-Kontur
- 2a,b: Erhebung
- 3: Lichtstrahl
- 4: Abbild
- 4a: Aufwölbung
- 5,5': Blickrichtung
- 6: Detektoreinrichtung
- 7: Bewegungsrichtung
- 8: Erstreckungsrichtung
- 9: Bilddatenspeicher
- 10: Bilddaten
- 11: elektronische Verarbeitungseinheit
- 12: optischer Sensor
- 13a, b: paralleler Ausgang
- 14: Lichtquelle
- 15: Interner Speicher
- 16: Gehäuse
- 17: Abstrahlrichtung
- 18: Beobachtungsbreite
- 19: Spiegel
- 20: Hauptebene
- 21: Lotrechte
- 22: Basisfläche
- 23: Durchlass
- 24: Platine
- 25: Zwischenspeicher
- 26: Stecker
- 27:
- 28:
- 29: Sicherheitsbereich
- 30: Interessierende Bereich
- α: Triangulations-Winkel
- α₁,α₂: Zwischenwinkel
- P1.1: Pixel
- D1.1: Datensatz
- Z1: Zeile
- R1: Reihe
- S1: Scan
- b, B: Breite

## Patentansprüche

1. Verfahren zur berührungslosen Ermittlung der Oberflächen-Daten, z. B. der Oberflächen-Kontur (2'), von Objekten (1) mittels des Lichtschnitt-Triangulations-Verfahrens, indem
- ein Lichtstrahl (3) auf die Oberfläche (2) des Objektes (1) gerichtet wird,
- das auf der Oberfläche (2) erzeugte Abbild (4), insbesondere ein linienförmiges Abbild (4), des Lichtstrahls (3) auf der Oberfläche (2) von einer in einem Triangulationswinkel (α) zur Blickrichtung (5) angeordneten Detektoreinrichtung (6) aufgenommen und
- diese Einzelbild-Ermittlung unter Relativbewegung von Objekt (1) und linienförmigem Abbild (4) in Bewegungsrichtung (7) quer zur Erstreckungsrichtung (8) des linienförmigen Abbildes (4) definiert vielfach hintereinander durchgeführt wird, und
- aus den so erhaltenen Einzelbild-Daten die Ergebnisdaten berechnet werden,
**dadurch gekennzeichnet, dass**
nur der für die Ermittlung der Ergebnisdaten benötigte Teil der Bilddaten (10) aus dem optischen Sensor (12) ausgelesen und weiterverarbeitet wird.

2. Verfahren nach Anspruch 1,
**dadurch gekennzeichnet, dass**
- abhängig vom erwarteten Verlauf des Abbildes (4), also der Lichtlinie, der optische Sensor (12) mit der Zeilenrichtung parallel oder quer zur Erstreckungsrichtung (8) des Abbildes (4) eingesetzt wird, und/oder insbesondere
- die Datenerfassung und Berechnung der Ergebnisdaten in Echtzeit während der Relativbewegung erfolgt.

3. Verfahren nach einem der vorhergehenden Ansprüche,
**dadurch gekennzeichnet, dass**
eine Orientierung der Zeilen des Sensors (12) quer zur Erstreckungsrichtung (8) der Lichtlinie nur gewählt wird, wenn
- die Richtung der Erstreckungsrichtung (8) sich um mehr als 30° ändern kann und/oder
- die Höhe der Aufwölbung (4a) im Abbild (4) mehr als 1/5 der Erstreckungsrichtung des optischen Sensors (12) betragen kann.

4. Verfahren nach einem der vorhergehenden Ansprüche,
**dadurch gekennzeichnet, dass**
- bei einer Breite (b) des linienförmigen Abbildes (4) von mehr als einem Pixel das linienförmige Abbild (4) auf eine Abfolge von Profilpunkten reduziert wird, wobei der einzelne Profilpunkt die Querposition des linienförmigen Abbildes (4) quer zu seiner Erstreckungsrichtung (8) repräsentiert und insbesondere berechnet wird als Schwerpunkt der Helligkeitswerte der entlang der Breite (b) des Abbildes (4) auf einem Querstreifen zur Lichtlinie nebeneinander liegenden Pixel, und/oder insbesondere
- der Schwerpunkt berechnet wird nach der Formel: Summe der Produkte der Helligkeitswerte mit den jeweiligen Pixelpositionen des Querstreifens, dividiert durch die Summe der Helligkeitswerte der Pixel des Querstreifens, und/oder insbesondere
- bei Zeilenorientierung des Sensors (12) lotrecht zur Erstreckungsrichtung (8) des Abbildes (4) nur diejenigen Pixel (z. B. P1.4, P1.5, P1.6) jeder Zeile (Z1...) in den Bilddatenspeicher (9) übertragen werden, die beleuchtet waren und im nächsten Verarbeitungsschritt die Ermittlung des repräsentativen Profilpunktes, insbesondere nach der Schwerpunktsformel, aus diesen in der gleichen Zeile liegenden Pixeln erfolgt.

5. Verfahren nach einem der vorhergehenden Ansprüche,
**dadurch gekennzeichnet, dass**
- die erste Zeile (Z1) vollständig aus dem Sensor (12) ausgelesen wird,
- festgestellt wird, welche Pixelpositionen in dieser Zeile beleuchtet waren, und
- bei allen folgenden Zeilen (Z2, Z3..) jeweils nur die in der vorherigen Zeile (Z1, Z2..) beleuchteten Pixel positionen (P1.4, P1.5, P1.6) plus ein definierter Sicherheits-Randbereich (+/-1), festgelegt in Pixelanzahl, neben den zuvor beleuchteten Pixelpositionen vom Sensor (12) in einen Zwischenspeicher (25) übernommen wird, und
- anschließend aus dem Zwischenspeicher (25) die darin enthaltenen Datensätze spaltenweise ausgelesen und auf einen einzelnen repräsentativen Profilpunkt, insbesondere nach der Schwerpunktmethode, reduziert werden.

6. Verfahren nach einem der vorhergehenden Ansprüche,
**dadurch gekennzeichnet, dass**
- bei Zeilenorientierung des Sensors (12) parallel zur Erstreckungsrichtung (8) des Abbildes (4) nur aus denjenigen Zeilen (Z1..) aus dem Sensor (12) Daten (D1..) ausgelesen und in den Bilddatenspeicher (9) übertragen werden, in denen beleuchtete Pixel (8) zur erwarten sind, und/oder insbesondere
- beim ersten Scan alle Zeilen des Sensors (12) ausgelesen werden und bei den folgenden Scans nur diejenigen Zeilen, in denen beim Scan vorher beleuchtete Pixel enthalten waren, zuzüglich eines in Zeilen festgelegten Sicherheits-Randbereiches zusätzliche Zeilen darüber und darunter, und/oder insbesondere
- im Zwischenspeicher (25) nur die Helligkeitswerte der Datensätze gespeichert sind und zusätzlich in einer Zusatzzeile die Position des ersten Pixels dieser Spalte in ursprünglichen optischen Sensor (12).

7. Verfahren nach einem der vorhergehenden Ansprüche,
**dadurch gekennzeichnet, dass**
- aus dem optischen Sensor nur die Datensätze des interessierenden Flächenbereiches (30) innerhalb der Sensorfläche ausgelesen werden und als interessierende Fläche die analoge Fläche beim vorhergehenden Scan zuzüglich eines umgebenden Sicherheitsbereiches (29) festgelegt wird, und/oder insbesondere
- beim ersten Scan die Bilddaten des gesamten Sensors ausgelesen und verarbeitet werden.
(Subtraktion statt Division)

8. Verfahren nach einem der vorhergehenden Ansprüche,
**dadurch gekennzeichnet, dass**
- in dem elektronischen Verarbeitungselement (11) der Schritt einer Division ersetzt ist durch ein mehrfach hintereinander erfolgendes Subtrahieren des Nenners vom Zähler und **dadurch** ein z. B. auf ganze Zahlen gerundetes Divisionsergebnis angenähert wird, und/oder insbesondere
- zur Vermeidung von Dezimalzahlen das Ergebnis mit so vielen Zehnerpotenzen multipliziert wird, wie ursprünglich Dezimalstellen vorhanden waren.
(Geradeziehen)

9. Verfahren nach einem der vorhergehenden Ansprüche,
**dadurch gekennzeichnet, dass**
- der erste und letzte, Profilpunkt in Erstreckungsrichtung (8) des Abbildes (4) hinsichtlich ihres Höhenversatzes zueinander untersucht werden und
- ihr Höhenversatz (δ h) dividiert durch die Abstände vom ersten bis zum letzten Profilpunkt von allen anderen Profilpunkten bis auf den niedrigsten Profilpunkt abgezogen werden, jeweils multipliziert mit der Anzahl der Profilpunktabstände, die der jeweilige Profilpunkt von dem am niedrigsten liegenden End-Profilpunkt entfernt liegt, und/oder insbesondere
- die geradegezogenen Linie auf annähernd Nullniveau gesetzt wird, also der erste und letzte Profilpunkt in Erstreckungsrichtung auf einen definierten Wert, der größer als Null ist, verschoben werden und analog alle anderen Profilpunkte in Erstreckungsrichtung.
**(Lichtlinie schneiden)**

10. Verfahren nach einem der vorhergehenden Ansprüche,
**dadurch gekennzeichnet, dass**
- die Aufwölbung (4a) im Abbild (4) bzw. die daraus erzeugte Profilpunkt-Linie, deren Erstreckungsrichtung parallel insbesondere zur Zeilenorientierung verläuft, auf einer definierten Messhöhe, die niedriger liegt als die Maximalhöhe der Aufwölbung (4a), der Querabstand der beiden Profilpunkte, die auf dieser Messhöhe liegen, ermittelt wird, und/oder insbesondere
- in einer Messzeile bzw. Messspalte, die parallel zur Erstreckungsrichtung (8) unterhalb des Maximums der Aufwölbung (4a) verläuft, der minimale und/oder der maximale Abstand der beleuchteten Profilpunkten (6.4, 6.8) ermittelt wird, und insbesondere die Mitte zwischen den so ermittelten Rändern der Aufwölbung (4a), und/oder insbesondere
- für die Aufwölbung (4a) im Abbild (4) bzw. die daraus erzeugte Profilpunkt-Linie, deren Erstreckungsrichtung parallel insbesondere zur Zeilenorientierung verläuft, auf einer definierten Messhöhe, die niedriger liegt als die Maximalhöhe der Aufwölbung (4a), die erste mathematische Ableitung der Koordinaten beider Profilpunkte, die auf dieser Messhöhe liegen, ermittelt wird, und/oder insbesondere
- die verarbeiteten und **dadurch** in ihrer Datenmenge drastisch reduzierten Bilddaten jedes Scans (S1, S2...) in Bewegungsrichtung (7) mittels der CPU zusammengesetzt werden mittels der Taktung der Produktionsanlage, und dabei insbesondere auch Anfang und Ende der Basisfläche (22) ermittelt werden.

11. Verfahren nach einem der vorhergehenden Ansprüche,
**dadurch gekennzeichnet, dass**
- sowohl das Auslesen der Bilddaten (10) aus dem Bilddatenspeicher (9), als auch
- das Reduzieren der Bilddatenmenge (10'), und
- die Umrechnung der Bilddaten (10) in Ergebnisdaten sowie gegebenenfalls
- die Berechnung weiterer konturabhängiger Parameter wie beispielsweise das Volumen von Erhebungen (2a, b) über eine Basisfläche (22) etc. innerhalb eines FPGA oder eines Gate-Array oder eines DSP durchgeführt wird.

12. Verfahren nach einem der Vorhergehenden Ansprüche,
**dadurch gekennzeichnet, dass**
- in dem elektronischen Verarbeitungseinheit (11), insbesondere dem FPGA, auch die Zwischenspeicherung der Bilddaten (10) in (9) nach dem Auslesen aus dem Sensor bis zur Weiterverarbeitung erfolgt, und/oder insbesondere
- in der elektronischen Verarbeitungseinheit (11), insbesondere dem FPGA, auch eine Central-Prozessing-Unit (CPU) zur Berechnung der Ergebnisdaten aus den bearbeiteten Bilddaten (10), nachgebildet ist, insbesondere mittels auf dem FPGA vorhandener Logik-Schaltelemente.

13. Verfahren nach einem der vorhergehenden Ansprüche, wobei
die Detektoreinrichtung (6) einen flächigen optischen Sensor (12) umfasst mit matrixförmig angeordneten Pixeln (P1.1, P1.2, .... P2.1, P2.2...) und analog entsprechend zugeordneten Pixel-Datensätzen (D1.1...),
**dadurch gekennzeichnet, dass**
die elektronische Verarbeitungseinheit (11), insbesondere der FPGA, mehrere Pixel-Datensätze (D1.1, D1.2) gleichzeitig bearbeitet, insbesondere so viele Pixel-Datensätze gleichzeitig, wie der dem Sensor (12) zugeordnete Bilddatenspeicher (9) parallele Ausgänge (13a, b..) besitzt.

14. Verfahren nach einem der vorhergehenden Ansprüche,
**dadurch gekennzeichnet, dass**
- sowohl das Auslesen der Bilddaten (10) aus dem Bilddatenspeicher (9), als auch
- das Reduzieren der Bilddatenmenge (10'), und
- die Umrechnung der Bilddaten (10) in Ergebnisdaten sowie gegebenenfalls
- die Berechnung weiterer konturabhängiger Parameter wie beispielsweise das Volumen von Erhebungen (2a, b) über einer Basisfläche (22) innerhalb ein und derselben elektronischen Verarbeitungseinheit (11) insbesondere eines FPGA, Gate-Arrays oder DSP durchgeführt wird.
(Pipelining)

15. Verfahren nach einem der vorhergehenden Ansprüche,
**dadurch gekennzeichnet, dass**
- die elektronische Verarbeitungseinheit (11), insbesondere der FPGA, mehrere funktional hintereinander ablaufende Operationen gleichzeitig, jedoch für unterschiedliche Pixel (P1.1, P1.2) und/oder unterschiedliche Scans (S1, S2), durchführt, und/oder insbesondere
- in Zeilenrichtung und/oder in Reihenrichtung definiert nur der jeweils n-te bzw. m-te Datensatz aus dem Sensor (12) ausgelesen und weiterverarbeitet wird, und/oder insbesondere
- eine Glättung der Profilpunktlinie und/oder der in Bewegungsrichtung (8) bestimmten Abfolge einander entsprechender Profilpunkte mittels Filtern erfolgt.

16. Vorrichtung zur Durchführung des Verfahrens nach einem der vorhergehenden Ansprüche, mit
- einer Lichtquelle (14),
- einer Detektoreinrichtung (6) mit einem flächigen optischen Sensor (12) und einer elektronischen Verarbeitungseinheit (11) zur Bilddatenverarbeitung und Berechnung der Ergebnisdaten (2'),
**dadurch gekennzeichnet, dass**
der optische Sensor (12) ein CMOS-Sensor ist.

17. Vorrichtung nach Anspruch 30,
**dadurch gekennzeichnet, dass**
- die elektronische Verarbeitungseinheit (11) ein FPGA ist, und/oder insbesondere
- die elektronische Verarbeitungseinheit (11) ein Gate-Array ist, und/oder insbesondere
- die elektronische Verarbeitungseinheit (11) ein digitaler Signalprozessor (DSP) ist.

18. Vorrichtung nach einem der vorhergehenden Vorrichtungsansprüche,
**dadurch gekennzeichnet, dass**
- die elektronische Verarbeitungseinheit (11) einen internen Speicher (15) umfasst, und/oder insbesondere
- die elektronische Verarbeitungseinheit (11) eine CPU, insbesondere ausgeführt als Softcore und gebildet mittels Logik-Elementen, umfasst, und/oder insbesondere
- Lichtquelle (14) und Detektoreinrichtung (6) vollständig innerhalb desselben Gehäuses (16) angeordnet sind und dabei die Abstrahlrichtung (17) der Lichtquelle (14) und die Blickrichtung (5) der Detektoreinrichtung (6) zur Oberfläche (2) des Objektes (1), insbesondere dessen Basisfläche (22), so ausgerichtet sind, dass beide zur Lotrechten (21) auf der Oberfläche (2), insbesondere Basisfläche (22), den gleichen Zwischenwinkel (α₁, α₂) aufweisen.

19. Vorrichtung nach einem der vorhergehenden Vorrichtungsansprüche,
**dadurch gekennzeichnet, dass**
- das Gehäuse (16) quer zur Bewegungsrichtung (7) des Objektes (1) relativ zur Detektoreinrichtung (6) eine Breite (b) nicht größer als die Beobachtungsbreite (18) der Detektoreinrichtung (6) und/oder der Breite des Abbildes (4) des Lichtstrahles (3) aufweist, insbesondere eine Breite (b) von nicht mehr als 2 cm, insbesondere von nicht mehr als 1,5 cm, und/oder insbesondere
- die Blickrichtung (5) der Detektoreinheit (6) innerhalb des Gehäuses (16) einmal durch einen Spiegel (19) umgelenkt ist und die ursprüngliche Blickrichtung (5') ausgehend von dem flächigen optischen Sensor (12) parallel zur Hauptebene (20) des Gehäuses (16) und insbesondere parallel zu derjenigen Schmalseite (16a) des Gehäuses (16) liegt, in welchem die Durchlässe (23a) für den austretenden Lichtstrahl (3) und/oder der Durchlass (23b) für die Detektoreinrichtung (6) angeordnet sind, und/oder insbesondere
- die gesamte Auswerteelektronik, insbesondere der FPGA, auf einer einzigen, parallel zur Hauptebene (20) des Gehäuses (16) darin angeordneten, Platine (24) untergebracht ist.
